# EUROPEAN PATENT SPECIFICATION

(11) **EP 0 782 897 B1**
(45) Date of publication and mention of the grant of the patent: **12.06.2002**
(21) Application number: 96100043.7
(22) Date of filing: 03.01.1996
(51) Int. Cl.: B23B 31/26

(54) **Tool pulling force magnification mechanism of spindle**
Werkzeug-Spannkraftsteigerungsmechanismus für eine Spindel
Outil mécanisme d'amplification de force de tirage pour une broche

(43) Date of publication of application: 09.07.1997
(73) Proprietor: INDUSTRIAL TECHNOLOGY RESEARCH INSTITUTE, Chutung, Hsinchu 31015 (TW)
(72) Inventor: Huang, Chun-Hung, Chutung, Hsinchu (TW); Shien, Tong-Jou, Hsinchu (TW)
(74) Representative: Haft, von Puttkamer, Berngruber, Czybulka

(56) References cited:
- DE-A- 3 726 305
- DE-A- 3 801 509
- DE-A- 3 936 121
- DE-A- 3 936 122
- DE-A- 4 201 013

## Description

The present invention is related to a tool pulling force magnification mechanism for use in a spindle shaft according to the preamble of claim 1.

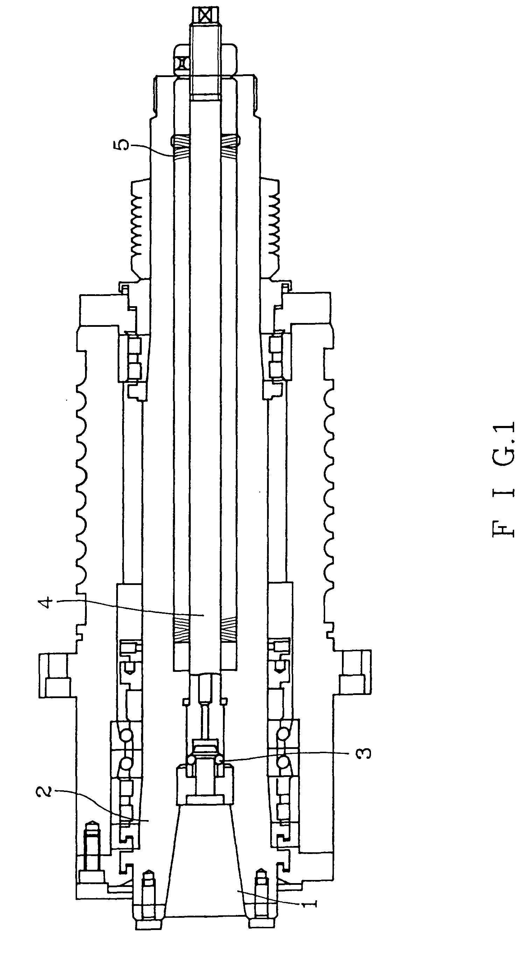

As shown in Fig. 1, in order to attain the function of tool changing, the spindles of a prior art's machine center are all equipped with a tool pulling mechanism in their shafts. The said tool pulling mechanism consists of a tool 1, a spindle shaft 2, balls 3, a draw bar 4 and springs 5 etc. The tool pulling force of the said tool pulling mechanism is mainly generated by the springs contained in the mechanism and is approximately equal to the acting spring force. The magnitude of the said tool pulling force can be as high as 700∼2000 kg or higher depending on the designed capacity of the said tool pulling mechanism.

But the prior art's pulling mechanism as stated above, must have the thrust, generated by the tool releasing hydraulic cylinder, greater than the tool pulling force to dominate the spring action, i.e. the tool releasing force must be greater than the tool pulling force such that it can make the tool separate from the shaft. Limitting by this, the force releasing hydraulic cylinder and the bearing loading as well as the shaft spring cannot be reduced, which is inconvenient to the part selection.

Therefore it is understood that the spindle tool pulling mechanism of the prior art as stated above is obviously inconvenient and having shortcomings in practical usage and on the manufacturing production and is expected to have rooms to improve.

The Document DE-A-3936112 describes a tool pulling force magnification mechanism for use in a spindle shaft according to the preamble of claim 1.

It is one short coming of this tool pulling force magnification mechanism that the piston-cylinder unit must be assembled together with the tool spindle. Therefor connector means are necessary.

The primary objective of the present invention is to provide a tool pulling force magnification mechanism, that can make the spindle's pulling force magnified while the tool releasing force doesn't need to be magnified, in doing so, it can lower the requirement of the tool releasing force and in consequence, the hydraulic cylinder of releasing force can be smaller in size, the releasing force can be lowered, also the bearing loading as well as the shaft spring can be reduced. This is convenient for the selection of other parts.

This objective is solved by a mechanism providing the features of claim 1.

The features of the present invention lies in the set up of several holes and slots in which balls are contained, at the draw bar's back end of the spindle's tool pulling force mechanism. The balls are squeezed or released by a slider contained in the draw bar. The slider's squeezing force is applied by a spring while its releasing force is applied by the tool releasing force from the back end of the spindle. The balls, being squeezed, will protrude out to the outside diameter of the back end of the draw bar in order to keep the tool pulling mechanism from being released and to keep the draw bar with tool pulling force, also the releasing of the balls will cause the tool releasing of the tool pulling mechanism, thereby, it possesses the function of magnification of pulling force.

An embodiment of this invention is described by way of example with reference to the drawing in which:
Fig. 1 is a longitudinal section view of the spindle's tool pulling force mechanism of the prior art.
Fig. 2 is a longitudinal section view of the present invention.
Fig. 3 is an isometric drawing of the draw bar's back end and the spring force transmitter of the present invention.
Fig.4 is the force diagram of the ball which illustrates the principle of pulling force magnification of the present invention.
Fig. 5 is the schematic diagram of the slider and the spring force transmitter equipped with spring of the present invention.
Fig.6 is an another embodiment of the force diagram of the ball of the present invention.

To facilitate to further understand and consent the objectives and features as well as efficacious of the present invention, a detailed explanation in conjunction with drawings is as follows:

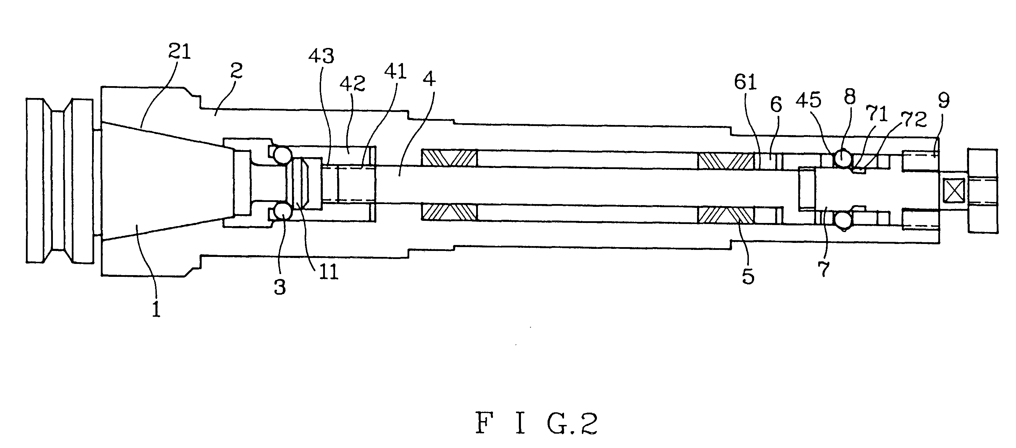

First of all, please refer to Fig. 2 which is the longitudinal section view of the present invention. It is a tool pulling mechanism of the spindle shaft, which generally consists of a tool 1, a spindle shaft 2, balls 3, a draw bar 4 and springs 5 etc. of parts. Among them, the draw bar 4 is contained inside the hollow part of the spindle shaft 2. The front end of the draw bar 4 has male screw 41 which can engage with the female screw 43 of the main body 42 of a draw bar and it is by this engagement that one can adjust the total length of the draw bar. There are several balls 3 contained close to the front end of the draw bar's main body 42. By means of these balls 3, it can generate a function to buckle up the pull stud 11 at the back end of the tool 1. The ball 3 can buckle up tight, the pull stud 11 if the draw bar 4 is subjected to a pulling force but the ball will slide into the area with larger inside diameter of the spindle shaft 2 if the draw bar is subjected to a sufficient pushing force which make the tool come off from the shaft 2. It is not necessary to go into details here since these structures of spindle pulling force mechanism are mostly the same as those of the prior art.

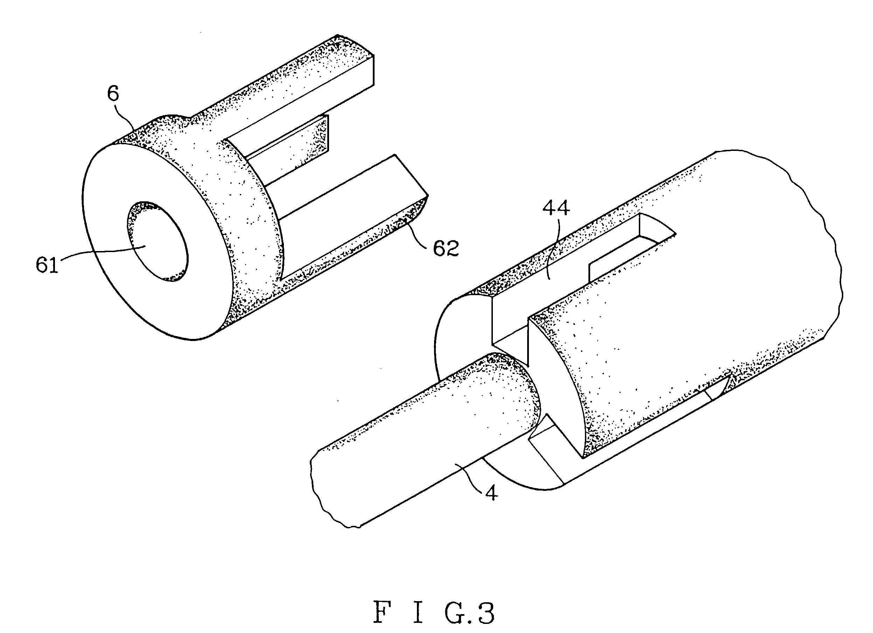

The outside diameter of the middle section of the draw bar is relatively smaller and the outside diameter of the back end is relatively larger and become a hollow one. The part between the middle section and the back end of the draw bar is also milled into the shape shown in Fig.3. The back end part of the draw bar 4 has larger diameter and is equipped, in equal-angle internals, with several slot 44 penetrated into the inside of the hollow part. A spring force transmitter 6 with its center hole 61 slips on to fit the outside diameter of the middle section of the draw bar 4, and with its back end equips, in equal-angle intervals, with several bulgers 62 to fit into their corresponding slots 44. What is more, the inside diameter of these bulgers is smaller than the inside diameter of the hollow part of the draw bar's back end such that the inside diameter of the bulgers, when they fit into the slots, will exceeds the hollow part's inside diameter of the draw bar's back part in order to touch the slider 7. The spring 5 is a kind of bevel cone spring which slips on the draw bar 4 and presses against the front end surface of the spring force transmitter 6 such that the spring force transmitter 6, can slide axially toward the back end part of the draw bar 4. A cylindrical slider 7, with its front end part fits into the hollow back end part of the draw bar 4, and by use of the stage difference between the back end part's inside diameter of the draw bar 4 and the inside diameter of the spring force transmitter 6, can push the front end surface of the slider 7 with its back end surface. The slider 7 is equipped, at its center part, with a ring of slot 72 having a taper shape 71 of cross section. The holes 45, equipped at the back end part of the draw bar 4, contain balls 8. By means of a screw nut 9 tight screwed at the back end of the shaft 2, the draw bar 4 fixes various parts inside the shaft in position. Thus the elements, including the back end of the draw bar 4 and slide 7 together with ball 8 etc. constructs a tool pulling force magnification mechanism.

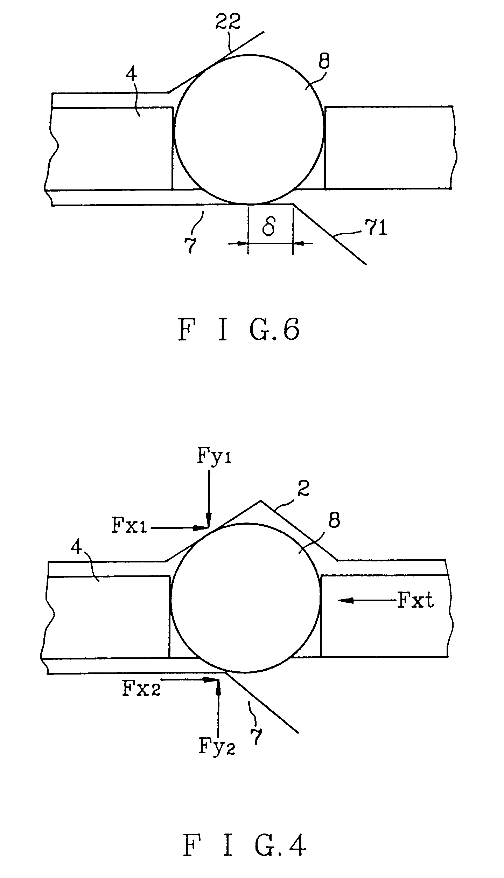

During the machining process, the tool 1, of the present invention's mechanism, is set inside the cone hole 21 of the spindle shaft 2. The tool's pull stud 11 is buckled by the balls 3 which is subjected to the pulling force of the draw bar. At this moment, the bevel cone spring 5 is compressed and its acting force is applied to the cylindrical slider 7 through the spring force transmitter 6, then, the taper 71 in the slot 72 of the cylindrical slider 7, squeeze the balls 8 till they protrude out to the outside diameter of the draw bar's back end so as to keep the tool pulling mechanism from being released and in the meantime, because of the action of the force component of the taper as shown in Fig.4, the pulling force of the draw bar 4 will dominate the spring force acting on the slider 7.

During the tool releasing, the tool releasing force (generated by hydraulic or pneumatic cylinders) of the present invention's mechanism is applied to the slider 7 in opposite direction to compress the spring 5, thereby, the cylindrical slider 7 can slide forward and the balls 8 can be released at once and can slide into the slot 72 on the cylindrical slider 7, thereafter, the draw bar can be pushed forward to complete the tool releasing action.

As shown in Fig.4, the crucial point of the present invention to attain the object that the tool releasing force is less than the tool pulling force, lies in the force magnification mechanism at the back end part of the tool pulling mechanism, as shown in the figure, the principle is as follows:
Let Fx₂ be the compression force of the spring 5 acting on the cylindrical slider 7 through the spring force transmitter 6. Fx₂ acts on the ball 8. Because of the action of the force components Fxt= Fx₁ + Fx₂ where Fxt is the pulling force of the draw bar 4. It is understood that the draw bar's pulling force Fxt is greater than the force generated by spring 5. On the other hand, one needs only to dominate Fx₂ when it comes to tool releasing, thereby, one can soon attain the object that tool releasing force is less than tool pulling force.

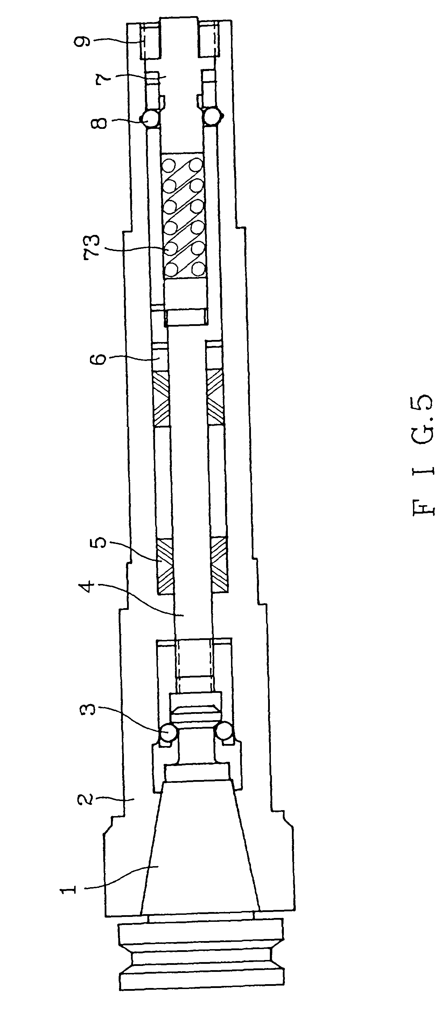

What is more, the present invention can also install an additional spring 73 between the cylindrical slider 7 and spring force transmitter 6 as shown in Fig.5. As shown in Fig.6, the cylindrical slider 7 of the present invention squeezes the balls 8. The way of force acting can be pressed against by the taper 22 and ball 8 or kept the balls 8 a small distance 8 away from the taper 71 of the slider 7, i inasmuch, it can attain the efficacy of positively tight buckling up the tool.

To summarize the foregoing statements, the present invention has the prior art's spindle tool pulling structure and provides the resolution of the efficacy the tool releasing force must be greater than the tool pulling force.

## Claims

1. A tool pulling force magnification mechanism for use in a spindle shaft (2), said spindle shaft (2) having a hollow portion and said tool pulling force magnification mechanism comprising:
a draw bar (4), contained in the hollow portion of the spindle shaft (2), said draw bar (4) having a front end and a back end relative to a tool (1) to be pulled;
a first spring (5), sleeved on the draw bar (4) at the back end thereof;
a slider (7) located at the back end of the draw bar (4) behind the spring (5) to receive a squeezing force thereform, **characterized that** said slider (7) is provided with a first ring slot (72) having a first forwardly tapered surface (71) on an outer surface thereof;
a second ring slot (22) having a second forwardly tapered surface formed on an external surface of the hollow portion of the spindle shaft (2) near the first forwardly tapered ring slot (71);
a hole (45) provided at the back end of the draw bar (4) having an end face;
wherein the first forwardly tapered ring slot (72), the second forwardly tapered ring slot (22), and the hole (45) are so structured such that
a) spring force from the spring (5) acting on the ball (8) at the end face plus a compressing force from the spindle shaft (2) acting on the ball (8) at the second forwardly tapered surface will be generated, and
b) during a releasing action, first forwardly tapered surface (71) is no long acting on the ball (8), so that only a releasing force that can overcome the spring force will be required.

2. The tool pulling force magnification mechanism for use in a spindle shaft (2) as claimed in claim 1, which further comprises a spring force from the spring (5) to the slider (7).

3. The tool pulling force magnification mechanism for use in a spindle shaft (2) as claimed in claim 2 which further comprises a second spring (73) disposed between the slider (7) and the spring force transmitter (6).

4. The tool pulling force magnification mechanism for use in a spindle shaft (2) as claimed in claim 3, wherein the second spring (73) is structured such that during the pulling action, the second spring (73) causes the ball (8) to move a small distance from a front end of the first forwardly tapered surface.

## Patentansprüche

1. Werkzeug-Spannkraftsteigerungsmechanismus für eine Spindel (2), wobei die Spindel (2) einen hohlen Bereich besitzt und der Werkzeug-Spannkraftsteigerungsmechanismus aufweist:
einen Zugstab (4), der in dem hohlen Bereich der Spindel (2) enthalten ist, wobei der Zugstab (4) ein vorderes Ende und ein hinteres Ende in Bezug auf ein einzuspannendes Werkzeug (1) aufweist,
eine erste Feder (5), die auf den Zugstab (4) am hinteren Ende desselben aufgeschoben ist, und
ein Gleitteil (7), das am hinteren Ende des Zugstabes (4) hinter der Feder (5) angeordnet ist, um von dieser eine Presskraft aufzunehmen, **dadurch gekennzeichnet, dass** das Gleitteil (7) einen ersten ringförmigen Schlitz (72) mit einer ersten nach vorne kegelig verlaufenden Fläche (71) an einer Außenfläche aufweist, dass
ein zweiter ringförmiger Schlitz (22) mit einer zweiten nach vorne kegelig verlaufenden Fläche an einer externen Fläche des hohlen Bereiches der Spindel (2) in der Nähe des ersten nach vorne kegelig verlaufenden ringförmigen Schlitzes (71) ausgebildet ist, und dass
ein eine Endfläche aufweisendes Loch (45) am hinteren Ende des Zugstabes (4) angeordnet ist,
wobei der erste nach vorne kegelig verlaufende ringförmige Schlitz (72), der zweite nach vorne kegelig verlaufende ringförmige Schlitz (22) und das Loch (45) so aufgebaut sind, dass
a) die von der Feder (5) auf eine Kugel (8) an der Endfläche ausgeübte Federkraft plus eine von der Spindel (2) auf die Kugel (8) an der zweiten nach vorne kegelig verlaufenden Fläche ausgeübte Kompressionskraft erzeugt werden, und dass
b) während einer Freigabeaktion die erste nach vorne kegelig verlaufende Fläche (71) nicht länger auf die Kugel (8) einwirkt, so dass nur eine Freigabekraft erforderlich ist, die die Federkraft überwinden kann.

2. Werkzeug-Spannkraftsteigerungsmechanismus für eine Spindel (2) nach Anspruch 1, wobei ferner eine Federkraft von der Feder (5) auf das Gleitteil (7) ausgeübt wird.

3. Werkzeug-Spannkraftsteigerungsmechanismus für eine Spindel (2) nach Anspruch 2, wobei ferner eine zweite Feder (73) vorgesehen und zwischen dem Gleitteil (7) und einem die Federkraft übertragenden Teil (6) angeordnet ist.

4. Werkzeug-Spannkraftsteigerungsmechanismus für eine Spindel (2) nach Anspruch 3, wobei die zweite Feder (73) so aufgebaut ist, dass während der Zugaktion die zweite Feder (73) bewirkt, dass die Kugel (8) sich eine kleine Strecke von einem vorderen Ende der ersten nach schräg verlaufenden Oberfläche wegbewegt.

## Revendications

1. Mécanisme d'amplification de force de traction d'outil destiné à être utilisé dans un axe de broche (2), ledit axe de broche (2) ayant une partie creuse et ledit mécanisme d'amplification de force de traction d'outil comprenant :
une barre de traction (4), contenue dans la partie creuse de l'axe de broche (2), ladite barre de traction (4) ayant une extrémité avant et une extrémité arrière par rapport à un outil (1) à tirer ;
un premier ressort (5) qui entoure la barre de traction (4) au niveau de son extrémité arrière ;
un curseur (7) situé à l'extrémité arrière de la barre de traction (4) derrière le ressort (5) pour recevoir de ce dernier une force de compression, **caractérisé en ce que** ledit curseur (7) est muni d'une première fente annulaire (72) ayant une première surface rétrécie vers l'avant (71) sur une surface extérieure ;
une deuxième fente annulaire (22) ayant une deuxième surface rétrécie vers l'avant formée sur une surface externe de la partie creuse de l'axe de broche (2) près de la première fente annulaire rétrécie vers l'avant (71) ;
un trou (45) prévu à l'extrémité arrière de la barre de traction (4) ayant une face d'extrémité ;
dans lequel la première fente annulaire rétrécie vers l'avant (72), la deuxième fente annulaire rétrécie vers l'avant (22), et le trou (45) sont structurés de telle manière que
a) la force élastique provenant du ressort (5) agissant sur la bille (8) au niveau de la face d'extrémité plus une force de compression provenant de l'axe de broche (2) agissant sur la bille (8) au niveau de la deuxième surface rétrécie vers l'avant vont être générées, et
b) pendant une action de libération, la première surface rétrécie vers l'avant (71) n'agit plus sur la bille (8), de sorte que seule une force de libération qui peut surmonter la force élastique sera nécessaire.

2. Mécanisme d'amplification de force de traction d'outil destiné à être utilisé dans un axe de broche (2), tel que revendiqué dans la revendication 1, qui comprend en outre une force élastique transmise par le ressort (5) au curseur (7).

3. Mécanisme d'amplification de force de traction d'outil destiné à être utilisé dans un axe de broche (2), tel que revendiqué dans la revendication 2, qui comprend en outre un deuxième ressort (73) placé entre le curseur (7) et l'élément de transmission (6) de force élastique.

4. Mécanisme d'amplification de force de traction d'outil destiné à être utilisé dans un axe de broche (2), tel que revendiqué dans la revendication 3, dans lequel le deuxième ressort (73) est structuré de telle manière que pendant l'action de traction, le deuxième ressort (73) fait se déplacer la bille (8) sur une petite distance depuis une extrémité avant de la première surface rétrécie vers l'avant.
